# EUROPEAN PATENT APPLICATION

(11) **EP 4 556 083 A1**
(43) Date of publication of application: **21.05.2025**
(21) Application number: 23839341.7
(22) Date of filing: 01.06.2023
(51) Int. Cl.: A62D 1/00

(54) **FIRE-EXTINGUISHING MATERIAL AND FIRE-EXTINGUISHING MATERIAL PACKAGE**

(30) Priority: 15.07.2022 JP 2022113810; 15.07.2022 JP 2022113815
(71) Applicant: Toppan Holdings Inc., Tokyo 110-0016 (JP)
(72) Inventor: KUROKAWA, Masato, Tokyo 110-0016 (JP); KAKEGAWA, Shunta, Tokyo 110-0016 (JP); SHIINE, Yasuharu, Tokyo 110-0016 (JP); HONJO, Yusaku, Tokyo 110-0016 (JP)
(74) Representative: Hoffmann Eitle
(86) International application number: PCT/JP2023/020471
(87) International publication number: WO 2024/014164

(57) **Abstract**

A fire-extinguishing material including a fire-extinguishing agent layer containing a fire-extinguishing agent and a binder resin, in which the fire-extinguishing agent contains at least one of a deliquescent organic salt and a deliquescent inorganic salt, and a surface of the fire-extinguishing agent layer has an arithmetic mean roughness Ra of 1.3 µm or less or a 60-degree glossiness of 2.7 or more.

## Description

### [Technical Field]

The present invention relates to a fire-extinguishing material and a fire-extinguishing material package.

### [Background Art]

Regarding the problem of ignition and fire, PTL 1 proposes using a fire-extinguishing liquid and a fire-extinguishing apparatus. PTL 2 proposes an automatic fire-extinguishing device to be dropped from a helicopter. PTL 3 proposes an aerosol fire-extinguishing device.

### [Citation List]

### [Patent Literatures]

PTL 1: JP H9-276440 A
PTL 2: JP 2015-6302 A
PTL 3: JP 2017-080023 A

### [Summary of the Invention]

### [Technical Problem]

PTLs 1 to 3 all propose a method of dealing with fire after a certain time has elapsed. On the other hand, from the viewpoint of minimizing damage from fire, it is desirable to perform some sort of fire-extinguishing work at a stage soon after ignition, i.e., to perform initial fire-extinguishing. Therefore, for example, a method is conceivable in which a fire-extinguishing material containing the fire-extinguishing agent component (an organic salt and an inorganic salt) disclosed in the prior art is previously placed in the vicinity of an object at risk of firing ignition. It is expected that this allows the fire-extinguishing material to be used for completing fire-extinguishing before a human being senses ignition of the object.

Note that a fire-extinguishing agent component can be mixed with a binder and the like to be processed into a suitable shape so that a solid fire-extinguishing material meeting the above-described purpose can be obtained. However, such a fire-extinguishing material has a room for further improvement from the viewpoint of stability of properties of the fire-extinguishing agent component.

The present invention has been made in view of the above-described circumstances, and has as its purpose to provide a fire-extinguishing material in which a fire-extinguishing agent has excellent stability of properties. In addition, the present invention has as its purpose to provide a fire-extinguishing material package in which the fire-extinguishing material is enclosed.

### [Solution to Problem]

An aspect of the present invention provides a fire-extinguishing material including a fire-extinguishing agent layer containing a fire-extinguishing agent and a binder resin, in which the fire-extinguishing agent contains at least one of a deliquescent organic salt and a deliquescent inorganic salt, and a surface of the fire-extinguishing agent layer has an arithmetic mean roughness Ra of 1.3 µm or less.

In such a fire-extinguishing material, the fire-extinguishing agent has excellent stability of properties, so that initial fire-extinguishing can be adequately performed even after a time has elapsed. The inventors estimate that this is because deterioration of the fire-extinguishing agent is suppressed by suppressing roughness of the surface of the fire-extinguishing agent layer to reduce the contact area between the fire-extinguishing agent and air.

Another aspect of the present invention provides a fire-extinguishing material including a fire-extinguishing agent layer containing a fire-extinguishing agent and a binder resin, in which the fire-extinguishing agent contains at least one of a deliquescent organic salt and a deliquescent inorganic salt, and a surface of the fire-extinguishing agent layer has a 60-degree glossiness of 2.7 or more.

In such a fire-extinguishing material, the fire-extinguishing agent has excellent stability of properties, so that initial fire-extinguishing can be adequately performed even after a time has elapsed. The inventors estimate that this is because deterioration of the fire-extinguishing agent is suppressed by increasing glossiness of the surface of the fire-extinguishing agent layer (i.e., suppressing roughness) to reduce the contact area between the fire-extinguishing agent and the air.

In a mode, the fire-extinguishing agent layer may contain 70 to 97 mass% of the fire-extinguishing agent with respect to the total amount of the fire-extinguishing agent and the binder resin.

In a mode, the salt may contain a potassium salt.

According to one mode, the salt may have an average particle size D50 of 1 to 100 µm.

According to one mode, the binder resin may contain a polyvinyl acetal-based resin.

According to one mode, the fire-extinguishing agent layer may have a thickness of 80 to 600 µm.

According to one mode, the fire-extinguishing material may further include a resin substrate disposed with the fire-extinguishing agent layer.

An aspect of the present invention provides a fire-extinguishing material package including the fire-extinguishing material and a packaging bag in which the fire-extinguishing material is to be enclosed.

### [Advantageous Effects of the Invention]

According to the present invention, there can be provided a fire-extinguishing material in which a fire-extinguishing agent has excellent stability of properties. Further, according to the present invention, there can be provided a fire-extinguishing material package in which the fire-extinguishing material is enclosed.

### [Brief Description of the Drawings]

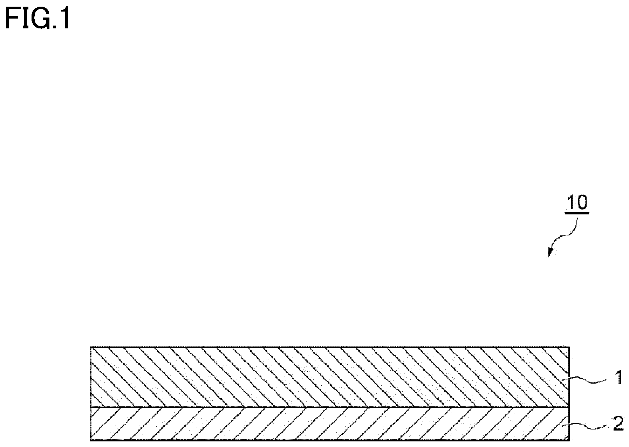

Fig. 1 is a schematic cross-sectional view of a fire-extinguishing material according to an embodiment.

### [Description of the Embodiments]

Hereinafter, suitable embodiments of the present disclosure will be described in detail. However, the present disclosure is not limited to the following embodiments.

### <Fire-Extinguishing Material>

Fig. 1 is a schematic cross-sectional view of a fire-extinguishing material according to an embodiment. A fire-extinguishing material 10 includes a fire-extinguishing agent layer 1 and a resin substrate 2 disposed with the fire-extinguishing agent layer 1. It can be said that the fire-extinguishing material 10 includes the resin substrate 2 and the fire-extinguishing agent layer 1 disposed on the resin substrate 2.

From the viewpoint of disposing the fire-extinguishing material in a desired position, the fire-extinguishing material may further include an adhesive layer or a tackiness layer. The adhesive layer or the tackiness layer may be disposed either on the fire-extinguishing agent layer side or on the resin substrate side.

### (Fire-Extinguishing Agent Layer)

The fire-extinguishing agent layer contains a fire-extinguishing agent and a binder resin.

As the fire-extinguishing agent, one having so-called four elements (removal effect, cooling effect, suffocation effect, and negative catalytic effect) of fire-extinguishing can be appropriately used depending on a fire-extinguishing object. The fire-extinguishing agent contains at least one of a deliquescent organic salt and a deliquescent inorganic salt both generally having fire-extinguishing performance.

Examples of the organic salt to function as a fire-extinguishing agent include a potassium salt, a sodium salt, and an ammonium salt. From the viewpoint of usability for the negative catalytic effect, a potassium salt can be suitably used as the organic salt. Examples of the organic potassium salt include carboxylic acid potassium salts such as potassium acetate, potassium citrate (tripotassium citrate), potassium tartrate, potassium lactate, potassium oxalate, and potassium maleate. Among these, potassium citrate can be used particularly from the viewpoint of reaction efficiency of the negative catalytic effect on combustion.

Examples of the inorganic salt to function as a fire-extinguishing agent include a potassium salt and a sodium salt. From the viewpoint of usability for the negative catalytic effect, a potassium salt can be suitably used as the inorganic salt. Examples of the inorganic potassium salt include potassium tetraborate, potassium carbonate, potassium hydrogen carbonate, potassium dihydrogen phosphate, and dipotassium hydrogen phosphate. Among these, potassium hydrogen carbonate can be used particularly from the viewpoint of reaction efficiency of the negative catalytic effect of burning.

The organic salts or the inorganic salts may be used individually or in combination of two or more.

The salt may be granular. The average particle size D50 of the salt can be 1 to 100 µm and may be 3 to 40 µm. When the average particle size D50 is the above-described lower limit or more, the salt is easily dispersed in a coating liquid. When the average particle size D50 is the above-described upper limit or less, stability in a coating liquid tends to improve so that the smoothness of the coating film improves, and desired arithmetic mean roughness or glossiness in the surface of the fire-extinguishing agent layer is easily achieved. The average particle size D50 can be calculated by wet measurement using a laser diffractometry particle size distribution measuring device.

The amount of the fire-extinguishing agent, with respect to the total amount of the fire-extinguishing agent and the binder resin (or the total amount of the fire-extinguishing agent layer), can be 70 to 97 mass% and may be 85 to 92 mass%. When the amount of the fire-extinguishing agent is the above-described upper limit or less, the deliquescence of the salt is easily suppressed, and a uniform fire-extinguishing material is easily formed. When the amount of the fire-extinguishing agent is the above-described lower limit or more, sufficient fire-extinguishing properties are easily maintained.

The fire-extinguishing agent may contain other components except for the above-described salt. An example of other components is an oxidant for improving the reactivity of the salt. Specific examples include potassium chlorate, sodium chlorate, strontium chlorate, ammonium chlorate, magnesium chlorate, potassium nitrate, sodium nitrate, strontium nitrate, ammonium perchlorate, potassium perchlorate, basic copper nitrate, copper oxide (I), copper oxide (II), iron oxide (II), iron oxide (III), and molybdenum trioxide. Among these, potassium chlorate is preferably used.

Other examples of other components include a colorant, an antioxidant, a flame retardant, an inorganic filler, a fluidity-imparting agent, a desiccant, a dispersant, a UV absorber, a flexibility-imparting agent, and a catalyst.

These other components can be appropriately selected depending on the type of the salt and the type of binder resin. The amount of other components contained in the fire-extinguishing agent, with respect to the total amount of the fire-extinguishing agent, can be 40 mass% or less, may be 10 mass% or less, and may be 0 mass%.

The binder resin contains, as the resin, at least one of a thermoplastic resin and a thermosetting resin.

Examples of the thermoplastic resin include polyolefin-based resins such as a polypropylene-based resin, a polyethylene-based resin, a poly(1-)butene-based resin, and a polypentene-based resin, a polystyrene-based resin, an acrylonitrile-butadiene-styrene-based resin, a methyl methacrylate-butadiene-styrene resin, an ethylene-vinyl acetate resin, an ethylene-propylene resin, a polycarbonate-based resin, a polyphenylene ether-based resin, an acrylic-based resin, a polyamide-based resin, a polyvinyl chloride-based resin, polyvinyl alcohol (PVA), and a polyvinyl acetal-based resin.

Examples of the thermosetting resin include rubbers such as natural rubber (NR), isoprene rubber (IR), butadiene rubber (BR), 1,2-polybutadiene rubber (1,2-BR), styrene-butadiene rubber (SBR), chloroprene rubber (CR), nitrile rubber (NBR), butyl rubber (IIR), ethylene-propylene rubber (EPR, EPDM), chlorosulfonated polyethylene (CSM), acrylic rubber (ACM, ANM), epichlorohydrin rubber (CO, ECO), polyvulcanized rubber (T), silicone rubber (Q), fluororubber (FKM, FZ), and urethane rubber (U), a polyurethane resin, a polyisocyanate resin, a polyisocyanurate resin, a phenol resin, an epoxy resin, and a polyvinyl ether (PMVE)-maleic anhydride resin.

Among the above-described resins, a polyvinyl acetal-based resin can be suitably used, from the viewpoint of film-forming properties of the coating film. An example of the polyvinyl acetal-based resin is polyvinyl butyral (PVB).

The binder resin may contain other components except for the above-described resins (thermoplastic resins and thermosetting resins).

An example of other components is a curing agent. From the viewpoint of stability of properties, other examples include a surfactant, a silane coupling agent, and an antiblocking agent.

These other components can be appropriately selected depending on the type of resin. The amount of other components contained in the binder resin, with respect to the total amount of the binder resin, can be 70 mass% or less, may be 30 mass% or less, and may be 0 mass%.

The thickness of the fire-extinguishing agent layer can be 80 to 600 µm and may be 150 to 300 µm. When the thickness is the above-described lower limit value or more, fire-extinguishing performance can be easily exerted. When the thickness is the above-described upper limit value or less, a coating film is easily formed, and bending resistance is good.

The area of the main surface of the fire-extinguishing agent layer is not particularly limited because it is adjusted depending on its use, but is set so as to be sufficiently wide relative to the area of the side surface. The area of the main surface can be, for example, 10 to 624 cm².

The arithmetic mean roughness Ra in the surface of the fire-extinguishing agent layer is 1.3 µm or less, may be 1.1 µm or less, may be 1.0 µm or less, may be 0.9 µm or less, and may be 0.7 µm or less. When Ra is 1.3 µm or less, the roughness of the surface of the fire-extinguishing agent layer can be suppressed to reduce the contact area between the fire-extinguishing agent and the air. Accordingly, deterioration of the fire-extinguishing agent layer mainly attributable to deliquescence of the fire-extinguishing agent can be suppressed, i.e., initial fire-extinguishing can be adequately performed even after time has elapsed. The lower limit of Ra is not particularly limited, but can be 0.1 µm or more from the viewpoint of easiness of film transportation.

The arithmetic mean roughness Ra is a value measured in accordance with JIS B 0601 and JIS B 0031. Ra is measured for the surface of the fire-extinguishing agent layer (i.e., the main surface of the fire-extinguishing agent layer or a surface perpendicular to the lamination direction of the fire-extinguishing agent layer), using a device such as a contact-type surface roughness meter (manufactured by Mitutoyo, Model No.: SJ-210). The Ra of the surface of the fire-extinguishing agent layer is measured at five different points, and an average thereof is determined as the Ra of the fire-extinguishing agent layer.

The 60-degree glossiness in the surface of the fire-extinguishing agent layer may be 2.7 or more, may be 2.8 or more, may be 2.9 or more, may be 2.95 or more, and may be 3.0 or more. The 60-degree glossiness being 2.7 or more means that the roughness of the surface of the fire-extinguishing agent layer is suppressed so that the contact area between the fire-extinguishing agent and the air is reduced. Accordingly, deterioration of the fire-extinguishing agent layer mainly attributable to deliquescence of the fire-extinguishing agent can be suppressed, i.e., initial fire-extinguishing can be adequately performed even after time has elapsed. The upper limit of the 60-degree glossiness is not particularly limited, but can be 30 or less from the viewpoint of easiness of film transportation.

The 60-degree glossiness is a value measured in accordance with JIS Z 8741. The glossiness is measured for the surface of the fire-extinguishing agent layer, using a glossiness meter (product name: RHOPOINT IQ, manufactured by RHOPOINTS Co.). The glossiness is measured at three different points on the surface of the fire-extinguishing agent layer, and an average thereof is determined as the glossiness of the fire-extinguishing agent layer.

The surface of the fire-extinguishing agent layer refers to the main surface of the fire-extinguishing agent layer (or a surface perpendicular to the lamination direction of the fire-extinguishing agent layer). The deliquescence of the fire-extinguishing agent gradually proceeds from a surface exposed to the air of the fire-extinguishing agent layer. This deliquescence proceeds more easily from the main surface of the fire-extinguishing agent layer, which has a large contact surface with the air, than the side surface of the fire-extinguishing agent layer, which has a small contact surface with the air. Therefore, when the Ra or glossiness in the main surface of the fire-extinguishing agent layer is adequately controlled, the deliquescence of the fire-extinguishing agent can be suppressed to obtain a fire-extinguishing material having excellent stability of properties.

When the fire-extinguishing material includes only a fire-extinguishing agent layer, and the fire-extinguishing agent layer has a first surface (front surface) and a second surface (back surface), the first surface and the second surface have an Ra of 1.3 µm or less or a 60-degree glossiness of 2.7 or more.

When the fire-extinguishing material includes a resin substrate and a fire-extinguishing agent layer disposed on the resin substrate, at least a surface opposite the resin substrate of the fire-extinguishing agent layer has an Ra of 1.3 µm or less or a 60-degree glossiness of 2.7 or more. Although a surface on the resin substrate side of the fire-extinguishing agent layer is protected by the resin substrate (is not a surface exposed to the air), it is preferable that the surface on the resin substrate side of the fire-extinguishing agent layer also has an Ra of 1.3 µm or less or a 60-degree glossiness of 2.7 or more.

### (Resin Substrate)

Examples of the resin constituting the resin substrate include polyolefin (such as LLDPE, PP, COP, or CPP), polyester (such as PET), fluororesins (such as PTFE, ETFE, EFEP, PFA, FEP, and PCTFE), PVC, PVA, acrylic resins, epoxy resins, polyamide, and polyimide. Even when the fire-extinguishing material is disposed such that the resin substrate side faces flame, these resins melt due to the heat of flame (generally, at about 700 to 900°C), and the fire-extinguishing agent layer is easily exposed. Further, when these transparent materials are selected, visual inspection of the fire-extinguishing agent layer and checking whether the fire-extinguishing agent layer needs to be replaced are facilitated. The resin substrate may contain the above-described fire-extinguishing agent.

From the viewpoint of adjusting the water vapor permeability, a vapor deposition layer (an alumina vapor deposition layer or a silica vapor deposition layer) having water vapor barrier properties may be disposed to the resin substrate. The vapor deposition layer may be disposed to either one surface or both surfaces of the resin substrate.

The thickness of the resin substrate can be appropriately adjusted depending on the amount of heat at possible ignition, impact, an available installation space, and the like. For example, when the substrate is thick, the strength and stiffness as a fire-extinguishing material are easily obtained, and handling is facilitated. When the substrate is thin, the fire-extinguishing material can be disposed in a narrow space, and initial fire-extinguishing properties improve because the substrate melts in a short time when heated by flame. The thickness of the resin substrate can be, for example, 4.5 to 100 µm and may be 12 to 50 µm.The resin substrate may be a laminate including a plurality of resin layers.

### <Method for Producing Fire-Extinguishing Material>

The fire-extinguishing material can be formed using a composition for forming a fire-extinguishing agent layer. The composition for forming a fire-extinguishing agent layer contains a fire-extinguishing agent, a binder resin, and a liquid medium. An example of the method for producing a fire-extinguishing material will be described.

A fire-extinguishing agent and a binder resin are mixed with a liquid medium to prepare a composition for forming a fire-extinguishing agent layer. An example of the liquid medium is an organic solvent. An example of the organic solvent is a water-soluble solvent. Examples thereof include alcohols such as methanol, ethanol, isopropyl alcohol, and n-propylalcohol; ketones such as acetone and methyl ethyl ketone; glycols such as ethylene glycol and diethylene glycol; and glycol ethers such as N-methylpyrrolidone (NMP), tetrahydrofuran, and butylcellosolve. From the viewpoint that an organic salt and an inorganic salt have deliquescency, the liquid medium may be an alcohol-based solvent and specifically may be ethanol.

The amounts of the fire-extinguishing agent and the binder resin are adjusted such that the amounts in the fire-extinguishing agent layer are the above-described desired amounts. The amount of the liquid medium is appropriately adjusted depending on the use method of the composition for forming a fire-extinguishing agent layer, but can be 30 to 70 mass% with respect to the total amount of the composition for forming a fire-extinguishing agent layer. It can be said that the composition for forming a fire-extinguishing agent layer that contains the liquid medium is a coating liquid for forming a fire-extinguishing agent layer.

A fire-extinguishing material can be produced by applying the coating liquid for forming a fire-extinguishing agent layer on a resin substrate and drying the coat. As described above, the Ra or glossiness of a surface exposed to the air of the fire-extinguishing agent layer needs to be adequately controlled, and adequate Ra or glossiness is easily achieved on both the front surface and the back surface of the fire-extinguishing agent layer by forming a fire-extinguishing agent layer by a coating method. It is inferred that this is a distinctive advantage of a coating method in which strong external pressure is not applied when forming a layer, and is hardly obtained by, for example, a molding method such as press molding.

The coating thickness is appropriately adjusted such that a fire-extinguishing agent layer having a desired thickness is obtained, also in consideration of applying pressure on the fire-extinguishing agent layer.

Only the fire-extinguishing agent layer may be peeled from the resin substrate to be used as the fire-extinguishing material. In such a case, the resin substrate is preferably subjected to a release treatment.

The coating can be performed by a wet coating method. Examples of the wet coating method include a gravure coating method, a comma coating method, a dip coating method, a curtain coat method, a spin coat method, a sponge roll method, and a die coat method.

The method for producing a fire-extinguishing material may further include applying pressure on the fire-extinguishing agent layer. This further facilitates the reduction of Ra or the improvement of glossiness. From the viewpoint of easily obtaining desired Ra or glossiness, the pressure application condition can be 0.2 MPa or more and may be 2.0 MPa or more. The upper limit of the pressure application condition can be 2.5 MPa or less from the viewpoint of flexibility of the coating film.

### <Fire-Extinguishing Material Package>

The fire-extinguishing material package includes the fire-extinguishing material and a packaging bag in which the fire-extinguishing material is to be enclosed. When the fire-extinguishing material is enclosed in the packaging bag, the stability of properties of the fire-extinguishing agent layer can be further improved, and excellent fire-extinguishing performance of the fire-extinguishing material is easily maintained. The fire-extinguishing material may be enclosed in a depressed state in the packaging bag.

The packaging bag can be formed by, for example, heat-sealing two resin films at four edges. Examples of the resin constituting the resin films include polyolefin (such as LLDPE, PP, COP, or CPP), polyester (such as PET), fluororesins (such as PTFE, ETFE, EFEP, PFA, FEP, and PCTFE), PVC, PVA, acrylic resins, epoxy resins, polyamide, and polyimide. These resins easily melt due to the heat of flame (generally, at about 700 to 900°C) to expose the enclosed fire-extinguishing material. Further, when these transparent materials are selected, an appearance test visual inspection and checking whether replacement is required are facilitated. The resin films may contain the above-described fire-extinguishing agent.

The water vapor permeability (in accordance with JIS K 7129, under conditions of 40°C/90%RH) of the resin film is not particularly limited because it can be designed depending on the type of fire-extinguishing agent, but can be 10.0 g/(m²·day) or less and may be 1.0 g/ (m²·day) or less.

From the viewpoint of adjusting the water vapor permeability, a vapor deposition layer (an alumina vapor deposition layer or a silica vapor deposition layer) having water vapor barrier properties may be disposed to the resin film. The vapor deposition layer may be disposed to either one surface or both surfaces of the resin film.

The fire-extinguishing material and the fire-extinguishing material package can be installed to or in the vicinity of an object at risk of ignition. Examples of the installation method include pasting, mounting, and packaging. Examples of the object at risk of ignition include building materials such as an electric wire, an electric switchboard, a distribution board, a control board, a rechargeable battery (such as a lithium ion battery), a wallpaper for building materials, and a ceiling material, and members such as a box for recovery of lithium ion batteries, a trash can, an automobile-related member, a wall outlet, and an outlet cover.

For example, in a device having installed therein the fire-extinguishing material or the fire-extinguishing material package, initial fire-extinguishing is automatically performed for ignition in the device. Therefore, it can be said that such a device is a device having an automatic fire-extinguishing function.

### EXAMPLES

The present invention will be described in more detail by the following examples, but the present invention is not limited to the examples.

### (Example 1)

Potassium chlorate (KClO₃) and tripotassium citrate were pulverized in an agate mortar to have an average particle size D50 of 12 µm or less. The tripotassium citrate is a deliquescent salt. This was prepared in an amount of 87 parts by mass, and added and mixed, together with 9 parts by mass of a polyvinyl butyral resin (manufactured by Dainichiseika Color & Chemicals Mfg. Co., Ltd.) and 4 parts by mass of a silane coupling agent (X-12-1287A, manufactured by Shin-Etsu Chemical Co., Ltd.), to a liquid medium containing 148 parts by mass of ethanol and 7 parts by mass of isopropyl alcohol, to thereby prepare a composition for forming a fire-extinguishing agent layer.

A fire-extinguishing material was formed by applying the composition for forming a fire-extinguishing agent layer on one surface of a polyethylene terephthalate (PET) substrate (product name: E7002, manufactured by Toyobo Co., Ltd., thickness: 50 µm) using an applicator such that a fire-extinguishing agent layer after drying had a thickness of 150 µm, and drying the coat at 75°C for 7 minutes.

### (Example 2)

A metal flat plate was pressed against the fire-extinguishing agent layer of the fire-extinguishing material obtained in Example 1 under the condition of 0.4 MPa to prepare a fire-extinguishing material.

### (Comparative Example 1)

A nylon mesh (aperture: 85 µm) was pressed against the fire-extinguishing agent layer of the fire-extinguishing material obtained in Example 1 under the condition of 0.4 MPa to prepare a fire-extinguishing material.

### (Comparative Example 2)

A fire-extinguishing material was obtained in the same manner as in Example 1 except that an acrylic resin was used instead of a polyvinyl butyral resin. A nylon mesh (aperture: 250 µm) was pressed against the fire-extinguishing agent layer of this fire-extinguishing material under the condition of 0.4 MPa to prepare a fire-extinguishing material.

### (Comparative Example 3)

A nylon mesh (aperture: 250 µm) was pressed against the fire-extinguishing agent layer of the fire-extinguishing material obtained in Example 1 under the condition of 0.4 MPa to prepare a fire-extinguishing material.

### (Comparative Example 4)

A nylon mesh (aperture: 250 µm) was pressed against the fire-extinguishing agent layer of the fire-extinguishing material obtained in Example 1 under the condition of 2.0 MPa to prepare a fire-extinguishing material.

### (Comparative Example 5)

A fire-extinguishing material was formed by applying the composition for forming a fire-extinguishing agent layer prepared in Example 1 on one surface of a polyethylene terephthalate (PET) substrate (product name: S10, manufactured by Toray Industries, Inc.) using a spray such that a fire-extinguishing agent layer after drying had a thickness of 150 µm, and drying the coat at 75°C for 7 minutes.

### <Various Evaluations>

The fire-extinguishing material obtained in each Example was evaluated as follows. The results are shown in Tables 1 and 2.

### (Measurement of Arithmetic Mean Roughness Ra)

The arithmetic mean roughness Ra of the surface (a surface opposite the PET substrate) of the fire-extinguishing agent layer of the fire-extinguishing material obtained in each Example was measured in accordance with JIS B 0601 and JIS B 0031 using a contact-type surface roughness meter (manufactured by Mitutoyo, Model No.: SJ-210). The Ra of the surface of the fire-extinguishing agent layer was measured at five different points, and an average thereof was determined as the Ra of the fire-extinguishing agent layer.

### (Measurement of 60-Degree Glossiness)

The 60-degree glossiness of the surface (a surface opposite the PET substrate) of the fire-extinguishing agent layer of the fire-extinguishing material obtained in each Example was measured in accordance with JIS Z 8741 using a glossiness meter (product name: RHOPOINT IQ, manufactured by RHOPOINTS Co.). The glossiness was measured at three different points on the surface of the fire-extinguishing agent layer, and an average thereof is determined as the glossiness of the fire-extinguishing agent layer.

### (Stability of Properties of Fire-Extinguishing Agent)

Two barrier films (water vapor transmittance: 0.2 to 0.6 g/ (m²·day), in accordance with JIS K 7129, under conditions of 40°C/90%RH) each including a sealant layer (L-LDPE (linear low-density polyethylene) resin, thickness: 30 µm) and a substrate layer (PET (polyethylene terephthalate) resin having a silica vapor deposition layer, thickness: 12 µm) were prepared. With these two barrier films, the fire-extinguishing material (50 mm × 50 mm) obtained in each Example was covered, and the barrier films were heat-sealed at four edges to enclose the fire-extinguishing material. The heat seal condition was 140°C and 2 seconds. This was used as an evaluation sample.

The evaluation sample was left to stand and stored for 10 hours under the condition of 85°C/85%RH, and the total light transmittance change rate was calculated from the total light transmittances of the fire-extinguishing material before and after storing. The total light transmittance was measured using a BYK-Gardner Haze-Guard Plus haze meter (manufactured by BYK Co.).

The measurement was performed with the fire-extinguishing material fixed such that light travelling from a light source into an integrating sphere passes through the fire-extinguishing material. Total light transmittance change rate (%) = (total light transmittance after storing - total light transmittance before storing)/total light transmittance before storing × 100

### - Evaluation criteria -

A: The total light transmittance change rate was less than 30%.
B: The total light transmittance change rate was 30 to 50%.
C: The total light transmittance change rate exceeded 50%.

**[Table 1]**

| | Ra (µm) | Change rate of total light transmittance (%) | Stability of Properties |
|---|---|---|---|
| Example 1 | 0.88 | 31.7% | B |
| Example 2 | 0.67 | 28.0% | A |
| Comparative Example 1 | 5.84 | 58.5% | C |
| Comparative Example 2 | 6.61 | 94.7% | C |
| Comparative Example 3 | 6.61 | 98.6% | C |
| Comparative Example 4 | 13.57 | 92.9% | C |
| Comparative Example 5 | 12.15 | 52.8% | C |

**[Table 2]**

| | 60-degree glossiness | Change rate of total light transmittance (%) | Stability of Properties |
|---|---|---|---|
| Example 1 | 2.9 | 31.7% | B |
| Example 2 | 3.0 | 28.0% | A |
| Comparative Example 1 | 2.6 | 58.5% | C |
| Comparative Example 2 | 1.8 | 94.7% | C |
| Comparative Example 3 | 1.8 | 98.6% | C |
| Comparative Example 4 | 1.7 | 92.9% | C |
| Comparative Example 5 | 2.1 | 52.8% | C |

### [Reference Signs List]

- 1: Fire-extinguishing agent layer
- 2: Resin substrate
- 10: Fire-extinguishing material

## Claims

1. A fire-extinguishing material comprising a fire-extinguishing agent layer containing a fire-extinguishing agent and a binder resin, wherein
the fire-extinguishing agent contains at least one of a deliquescent organic salt and a deliquescent inorganic salt, and
a surface of the fire-extinguishing agent layer has an arithmetic mean roughness Ra of 1.3 µm or less.

2. A fire-extinguishing material comprising a fire-extinguishing agent layer containing a fire-extinguishing agent and a binder resin, wherein
the fire-extinguishing agent contains at least one of a deliquescent organic salt and a deliquescent inorganic salt, and
a surface of the fire-extinguishing agent layer has a 60-degree glossiness of 2.7 or more.

3. The fire-extinguishing material according to claim 1 or 2, wherein the fire-extinguishing agent layer contains 70 to 97 mass% of the fire-extinguishing agent with respect to a total amount of the fire-extinguishing agent and the binder resin.

4. The fire-extinguishing material according to any one of claims 1 to 3, wherein the salt contains a potassium salt.

5. The fire-extinguishing material according to any one of claims 1 to 4, wherein the salt has an average particle size D50 of 1 to 100 µm.

6. The fire-extinguishing material according to any one of claims 1 to 5, wherein the binder resin contains a polyvinyl acetal-based resin.

7. The fire-extinguishing material according to any one of claims 1 to 6, wherein the fire-extinguishing agent layer has a thickness of 80 to 600 µm.

8. The fire-extinguishing material according to any one of claims 1 to 7, further comprising a resin substrate disposed with the fire-extinguishing agent layer.

9. A fire-extinguishing material package comprising the fire-extinguishing material according to any one of claims 1 to 8 and a packaging bag in which the fire-extinguishing material is to be enclosed.
